(19) Europäisches Patentamt
European Patent Office
Office européen des brevets

(11) **EP 4 124 902 A1**

(12) **EUROPEAN PATENT APPLICATION**

(43) Date of publication:
**01.02.2023 Bulletin 2023/05**

(21) Application number: **21188715.3**

(22) Date of filing: **30.07.2021**

(51) International Patent Classification (IPC):
**G02C 7/06** *(2006.01)*    **G02C 7/02** *(2006.01)*

(52) Cooperative Patent Classification (CPC):
**G02C 7/063; G02C 7/024;** G02C 2202/16

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Carl Zeiss Vision International GmbH 73430 Aalen (DE)**<br><br>(72) Inventor: **REESE, Martin 73430 Aalen (DE)**<br><br>(74) Representative: **PATERIS Patentanwälte PartmbB Danckelmannstraße 9 14059 Berlin (DE)** |

(54) **SPECTACLE LENS DESIGN FOR A PROGRESSIVE POWER LENS, DETERMINING SUCH A SPECTACLE LENS DESIGN AND MANUFACTURING A SPECTACLE LENS**

(57)    A spectacle lens design and a progressive power lens with a distance portion (7), a near portion (9), a corridor (11) extending between the distance position (7) and the near portion (9), and peripheral zones delimited by the distance portion (7), the near portion (9) and the corridor (11) are provided. The spectacle lens design and the progressive power lens are composed of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1-5.5) include a central segment (1) forming the distance portion (7), the near portion (9) and the corridor (11), and peripheral segments (3.1-3.5, 5.1-5.5). In addition, a method of determining a spectacle lens design for a progressive power lens is provided.

Fig. 1

EP 4 124 902 A1

**Description**

The present invention relates to a spectacle lens design for a progressive power lens, as well as to a computer implemented method, a computer program, and a data processing system for determining a spectacle lens design for a progressive power lens. Moreover, the invention relates to a non-volatiles computer readable storage medium with instructions store thereon for determining a spectacle lens design. Furthermore, the invention relates to a method of manufacturing a spectacle lens and to a progressive power lens.

A progressive power lens is a special kind of a multifocal lens. In addition to a distance portion providing the dioptric power for distance vision, in particular the focal power for distance vision, and a near portion providing the dioptric power for near vision, in particular the focal power for near vision, a progressive power lens although includes a corridor, which is a portion providing a change in focal power from the focal power of distance vision to the focal power of near vision along a so called umbilical line. The distance portion, the near portion, and the corridor are usually formed by shaping the front surface of the spectacle lens, i.e. the surface facing away from the eye of the wearer, or the rear surface of the spectacle lens, i.e. the surface facing towards the eye of a wearer, into a freeform surface which is the result of an optimization process and which provides, together with the other one of the front surface and the rear surface, the optical properties desired for the distance portion, the near portion, and the corridor. However, the desired optical properties may also be achieved by shaping the front surface and the rear surface into suitably optimized freeform surfaces. Progressive power lenses and the way of optimizing the freeform surfaces are, for example, described in EP 3 462 230 A1, US 7,344,245 B2, US 8,128,226 B2, and US 8,434,025 B2. Independent of whether the optimized freeform surface is formed on the front surface, the rear surface or on both surfaces the residual astigmatic error perceived by a wearer increases with increasing perpendicular distance from the umbilical line. According to the Minkwitz theorem the residual astigmatic error increases twice as much as the increase of the focal power along the umbilical line.

As an alternative to progressive power lenses there are multifocal lenses such as bifocal lenses which typically include a distance portion and a near portion, usually a circular section with a straight or bent (in c-shaped fashion) upper separating line to the distance portion. Multifocal lenses are, for example, described in WO 2021/009268 A1, US 9,618,774 B2. Segmented spectacle lenses can be manufactured with less residual astigmatic error than progressive power lenses. However, multifocal lenses have the drawback that the separating line is clearly visible and, thus, negatively affects the aesthetical appearance of the spectacle lens. In addition, there is a discontinuity in the lens surface which typically leads to optical aberrations and image distortions such as, e.g., double images. These aberrations and image distortions are perceived by the wearer when the gaze crosses the separating line during a change from distance vision to near vision. Although the aesthetical appearance can be improved by a blend zone between the distance portion and the near portion which conceals the separating line optical aberrations and image distortions would still be present in the in the blend zone. US 8,297,751 B2 discloses a multifocal lens in which most of the separating line is blended to achieve an aesthetically satisfying appearance, while a small part of the separating line, which lies in the path along which the line of sight moves when the gaze changes from distance vision to near vision, forms a discontinuity between the surfaces of the distance portion and the near portion to allow for avoiding or reducing optical aberrations and image distortions.

With respect to the progressive power lenses according to the state of the art such as progressive power lenses as disclosed in US 7,344,245 B2, it is a first objective of the present invention to provide a spectacle lens design for a progressive power lens as well as a progressive power lens showing less residual astigmatic error in a direction perpendicular to the umbilical line than the state of the art progressive power lenses and less image distortion than a bifocal lens.

It is a second objective of the present invention to provide a computer implemented method for determining a spectacle lens design for an progressive power lens, a computer program for determining a spectacle lens design for a progressive power lens, a non-volatile computer readable storage medium with instructions stored thereon for determining a spectacle lens design for a progressive power lens, and a data processing system for determining a spectacle lens design for a progressive power lens, where the determined spectacle lens design leads to less residual astigmatic error in a direction perpendicular to the umbilical line than spectacle lens designs for state of the art progressive power lenses and to less image distortion than with a bifocal lens.

It is a third objective of the present invention to provide a method of manufacturing a progressive power lens that shows less residual astigmatic error in a direction perpendicular to the umbilical line than state of the art progressive power lenses and less image distortion than bifocal lenses.

The first objective is achieved by a spectacle lens design for a progressive power lens as claimed in claim 1 and by a progressive power lens as claimed in claim 19.

The second objective is achieved by a computer implemented method of determining a spectacle lens design for a progressive power lens as claimed in claim 9, by a computer program for determining a spectacle lens design for a progressive power lens, as claimed in claim 13, by a non-volatile computer readable storage medium with instructions stored thereon for determining a spectacle lens design for a progressive power lens, as claimed in claim 14, and by a data processing system for determining a spectacle lens design for a progressive power lens, as claimed in claim 15.

The third objective is achieved by a method of manufacturing a progressive power lens, as claimed in claim 16. The depending claims contain further developments of the invention.

An inventive spectacle lens design for a progressive power lens includes a distance portion, a near portion, and a corridor extending between the distance portion and a near portion and is composed of segments with discontinuities between neighboring segments in at least one of refractive index and surface shape. Discontinuities in the surface shape may, for example, be discontinuities in the height of the surface leading to steps between the surfaces of neighboring segments. The segments include a central segment forming the distance portion, the near portion and the corridor, and peripheral segments forming the peripheral zones.

The inventive spectacle lens design may be represented by a progressive power lens having the respective design features (physical representation of the spectacle lens design) or by a numerical data set describing the design features (numerical representation of the spectacle lens design). A numerical data set describing the design features may be stored in a memory of a computer or on a computer-readable (particularly non-transitory) storage medium. In addition, the data set may be retrievable from a data network like, for example, the internet or a local area network (LAN).

Composing the spectacle lens design from segments allows for optimizing the surface shape and/or the refractive index of the segments such that peripheral zones, i.e. the zones that are formed by the peripheral segments, with reduced residual astigmatic error in a direction perpendicular to the umbilical line can be realized as compared to state of the art progressive power lenses. The strong increase of residual astigmatic error outside the corridor in a direction perpendicular to the umbilical line as described by the Minkwitz theorem is overcome with the present invention by the discontinuities in at least one of the refractive index and the surface shape between neighboring segments. In addition, as the distance portion, the near portion and the corridor of the spectacle lens design are formed by a single segment, a continuous progression of focal power from the distance power to the near power without double images experienced be a wearer during a change from distance vision to near vison can be guaranteed. If at all, double images would only occur in the peripheral zones, i.e. the zones outside the central segment, which are usually not used when the wearer focusses on an object. Hence, the inventive spectacle lens design combines low residual astigmatic error in the peripheral zones with the smooth progression of focal power from distance power to near power without causing double images during a change from distance vision to near vision or vice versa.

It should be noted that discontinuities in both the surface shape and the refractive index are not necessary. For example, all segments of the spectacle lens design may have the same refractive index so that the refractive index is constant over the whole spectacle lens design. The discontinuities would then be present in the surface shape alone. Likewise surface shape may be continuous over the whole spectacle lens design with discontinuities in the refractive index being present between neighboring segments. However, discontinuities in the surface shape combined with discontinuities in the refractive index are not excluded.

A spectacle lens design for a progressive power lens which is very comfortable to where can be realized if combinations of refractive indices and surface shapes are assigned such to the segments that an residual astigmatic error in the peripheral zones does not exit a given threshold. A suitable assignment can be found by an optimization process which allows for the discontinuities between neighboring segments in at least one of refractive index and surface shape. The sizes of the discontinuities are additional parameters in the optimization process which are not available in the optimization processes for optimizing state of the art spectacle lens designs for progressive power lenses. The given threshold may, for example, be 1.5 D or, preferably, 1.0 D, and, more preferably 0.75 D diopter. By using a threshold of 1.0 D it can be achieved that in more than 90 percent of the area of the spectacle lens design the residual astigmatic error does not exceed 0.5 diopter. With lower thresholds even less residual astigmatic error can be realized. In a particular design of the spectacle lens design and the optimization process, the refractive index could be assigned to be constant for the whole spectacle lens design although this is not mandatory.

In order to avoid annoying steps in focal power between neighboring segments combinations of refractive indices and surface shapes may be assigned such to each segment that steps in focal power at the borders between neighboring segments are not larger than 0.5 D, preferably not larger than 0.25 D. As objects are typically focused through the distance portion, the near portion and the corridor a small step in focal power in the peripheral zones does not reduce comfort of a progressive power lens based on the inventive spectacle lens design very much. Again, the refractive index could be assigned to be constant for the whole spectacle lens design although this is not mandatory.

Moreover, combinations of refractive indices and surface shapes may be assigned such to each segment that steps in the directions by which rays of light are refracted by the surfaces of the segments at the borders between neighboring segments are not larger than 1 degree. Preferably the combinations of refractive indices and surface shapes may be assigned such the steps are not larger than 0.5 degree and, more preferably, not larger than 0.2 degree. Again, the refractive index could be assigned to be constant for the whole progressive power lens although this is not mandatory.

The peripheral segments adjoining the central segment may be annular segments. Annular segments are easy to manufacture as manufacturing tools usually move along circular paths. If all annular segments located on the same side of the corridor have the same geometric center manufacturing the segments is particularly easy. Having annularly shaped peripheral segments on both sides of the central segment leads to a constricted shape of the central segment with a wide upper part, a wide lower part and a constricted, i.e. narrow, intermediate part. Such a shape of the central segment is advantageous because it allows for a wide distance portion in the upper part and a wide near portion in the lower part with a corridor being formed in the constricted part.

When the discontinuities include discontinuities in the height of the surfaces as discontinuities in the surface shape these discontinuities in the height of the surfaces lead to steps between the surfaces of neighboring segments. These steps may be covered by a cover element cemented to surfaces including the steps. The cover element may have a different refractive index than the segments the surfaces of which are covered by the cover element. By this measure, a smooth surface of a progressive power lens based on the inventive spectacle lens design can be achieved which improves aesthetic appearance of a progressive power lens based on the inventive spectacle lens design. Moreover, as the cover element provides a further degree of freedom, namely the refractive index of the cover element, assigning a suitable refractive index to the cover element may allow for further reducing residual astigmatic error and/or steps in focal power and/or steps in the directions by which rays of light are refracted. Furthermore, if the refractive index of the cement differs at least from one of the refractive index of the segments and the refractive index of the cover element there is a further degree of freedom which can be used to reduce residual astigmatic error and/or steps in focal power and/or steps in the directions by which rays of light are refracted further.

According to a further aspect of the invention, a computer implemented method of determining is spectacle lens design for a progressive power lens is provided. This computer implemented method comprises a step of determining at least one surface of a numerically represented spectacle lens such that the numerically represented spectacle lens with the optimized surface provides a distance portion, a near portion, and a corridor extending between the distance portion and the near portion. In addition, the computer implemented method includes a step of composing the spectacle lens design from numerical representations of segments with discontinuities between neighboring segments in at least one of refractive index and surface shape, where the segments include a central segment being a segment of the numerically represented spectacle lens with the optimized surface, and peripheral segments forming the peripheral zones.

The inventive computer implemented method allows for determining spectacle lens design which can be used for manufacturing the inventive progressive power lens by using the determined spectacle lens design in controlling manufacturing machines for manufacturing a progressive power lens. Hence, the inventive computer implemented method allows for manufacturing a progressive power lens with the advantages mentioned with respect to the inventive progressive power lens.

In the inventive computer implemented method, combinations of refractive indices and surface shapes of the segments may be optimized such that a residual astigmatic error does not exceed a given threshold. This allows for defining a target residual astigmatic error which shall not be exited in the result of the optimization process which in turn allows for defining a desired maximum residual astigmatic error in the peripheral zones. The Minkwitz theorem can be overcome by using the degrees of freedom provided by optimizing the size of the discontinuities between neighboring segments in at least one of refractive index and surface shape. A suitable threshold for the residual astigmatic error in the peripheral zones is 1.5 diopter preferably 1 diopter, and more preferably 0.75 diopter.

Moreover, the combination of refractive indices and surface shapes of the segments may be optimized such that steps in focal power at the borders between neighboring segments are not larger than 1.0 D, preferably not larger than 0.5 D and, more preferably, not larger than 0.25 D. This optimization allows for preventing annoying jumps in focal power at the borders between neighboring segments in a progressive power lens that is manufactured based on the determined spectacle lens design.

Furthermore, the combinations of refractive indices and surface shapes may be optimized such that steps in the directions by which rays of light are refracted by the surfaces of the segments at the borders between neighboring segments are not larger than 1 degree, preferably not larger than 0.5 degree and, more preferably, not larger than 0.2 degree. This optimization allows for reducing the amount by which double images are perceived when the view through a progressive power lens that is manufactured based on the determined spectacle lens design passes the borders between neighboring segments of the progressive power lens. A step in the direction by which a ray of light is refracted by the surfaces of the segments at the borders between neighboring segments is represented by an angle. The smaller the angle is, the smaller is the step, and the smaller the step in the direction by which a ray of light is refracted by the surfaces of the segments at the borders between neighboring segments the smaller is the relative shift between the double images perceived by a wearer of the progressive power lens. Smaller shifts between the double images make them less annoying. If the steps in the directions by which rays of light are refracted by the surfaces of the segments would be 0 degree the double images would disappear.

In the mentioned optimization processes, preferences of the wearer may be considered. For example, some wearers may be less sensitive to residual astigmatic error but more sensitive to the relative shift between double images in or steps in the focal power the peripheral view while others may be more sensitive to residual astigmatic error but less sensitive to the relative shift between double images in or to steps in the focal power the peripheral view. Hence, the optimization process may be individualized according to the preferences of the wearer for which a spectacle lens design is to be determined.

According to a further aspect to the present invention, a computer program for determining is spectacle lens design for a progressive power lens is provided. The computer program comprises instructions that, when executed on a computer, prompt the computer to optimize at least one surface of a numerically represented spectacle lens such that the numerically represented spectacle lens with the optimized surface provides a distance portion, a near portion, and a corridor extending between the distance portion and the near portion. Furthermore, the computer program comprises instructions that, when executed on a computer, prompt the computer to compose the spectacle lens design from numerical representations of segments with discontinuities between neighboring segments in at least one of refractive index and surface shape, where the segments include a central segment being a segment of the numerically represented spectacle lens with the optimized surface, and peripheral segments forming the peripheral zones..

The inventive computer program allows for implementing the inventive computer implemented method on a computer or any other suitable data processing system and, hence, for achieving the advantages described with respect to the inventive computer implemented method. Moreover, the computer program may be develop further such that it includes instructions that prompt the computer to perform the further developments of the computer implemented method described above.

According to a still further aspect of the present invention a non-volatile computer readable storage medium with instructions stored thereon for determining a spectacle lens design for a progressive power lens is provided. The instructions, when executed on a computer, prompt the computer to optimize at least one surface of a numerically represented spectacle lens such that the numerically represented spectacle lens with the optimized surface provides a distance portion, a near portion and a corridor extending between the distance portion and the near portion. Furthermore, the non-volatile computer readable storage medium includes instructions that, when executed on a computer, prompt the computer to compose the spectacle lens design from numerical representations of segments with discontinuities between neighboring segments in at least one of refractive index and surface shape, where the segments include a central segment being a segment of the numerically represented spectacle lens with the optimized surface, and peripheral segments forming the peripheral zones..

The inventive non-volatile computer readable storage medium allows a computer or any other suitable data processing system to load the inventive computer program from the storage medium. Hence, the inventive non-volatile computer readable storage medium allows for realizing the advantages of the inventive computer implemented method with by use of a computer. The non-volatile computer readable storage medium may also include instructions stored thereon that, when executed on a computer, prompt the computer to perform the further developments of the inventive computer implemented method which allows to realize the further developments of the inventive computer implemented method by use of a computer, too.

According to a still further aspect of the invention, a data processing system for determining is spectacle lens design for a progressive power lens is provided. The data processing system, which may be a personal computer, comprises a processor and at least one memory, where the processor is configured, on the basis of instructions of a computer program stored in the memory, to optimize at least one surface of a numerically represented spectacle lens such that the numerically represented spectacle lens with the optimized surface provides a distance portion, a near portion and a corridor extending between the distance portion and the near portion. In addition, a processor is configured, on the basis of the instructions of the computer programs stored in the memory, to compose the spectacle lens design from numerical representations of segments with discontinuities between neighboring segments in at least one of refractive index and surface shape, where the segments include a central segment being a segment of the numerically represented spectacle lens with the optimized surface, and peripheral segments forming the peripheral zones.

The inventive data processing system allows for running the inventive computer implemented method and, thus, for achieving the advantages described with respect to the computer implemented method. In addition, the processor of the data processing system may be configured, on the bases of instructions of the computer program stored in the memory, to perform the further developments of the inventive computer implemented method so that the data processing system may be used to realize the advantages described above with respect to the further developments of the computer implemented method.

According to a still further aspect of the present invention, a method of manufacturing a progressive power lens is provided. The method comprises the step of forming segments of the progressive power lens according to the inventive spectacle lens design. The inventive method allows for manufacturing a progressive power lens having the advantages mentioned above with respect to the inventive spectacle lens design.

For setting the refractive indices of the segments according to the spectacle lens design the segments may doped with at least one of dopant materials and dopant densities varying between at least two of the segments. Doping the segments allows for individually setting the refractive indices of the segments by using masks, i.e. with a process that is relatively easy to handle.

Moreover, the segments may formed such that the discontinuities include discontinuities in the height of the surfaces as discontinuities in the surface shape. These discontinuities in the height of the surfaces lead to steps between the surfaces of neighboring segments. In this case, a cover element may be cemented to the surfaces including the steps. The cover element leads to a smooth appearance of the surface and provides for additional freedom in designing the properties of the progressive power lens.

In addition, an inventive progressive power lens is provided which includes a distance portion, a near portion, and a corridor extending between the distance portion and a near portion. The progressive power lens is composed of segments with discontinuities between neighboring segments in at least one of refractive index and surface shape. Discontinuities in the surface shape may, for example, be discontinuities in the height of the surface leading to steps between the surfaces of neighboring segments. The segments include a central segment forming the distance portion, the near portion and the corridor, and peripheral segments forming the peripheral zones. In other words, the inventive progressive power lens is a physical representation of the spectacle lens design which may also include the further developments described with respect to the inventive spectacle lens design.

Further features, properties and advantageous of the present invention will become clear from the following description of embodiments in conduction with the companying drawings.

Figure 1     shows the layout of a first exemplary embodiment of a progressive power lens.

Figure 2     shows a computer implemented method of determining a spectacle lens design for a progressive power lens in form of a flow chart.

Figure 3     shows a table with coefficients for a first concrete example of a progressive power lens.

Figure 4     shows the distribution of spherical power for the first concrete example of a progressive power lens.

Figure 5     shows the distribution of residual astigmatic error for the first concrete example of a progressive power lens.

Figure 6     shows a second exemplary embodiment of a progressive power lens in a cut out sectional view.

Figure 7     shows a table with coefficients for a second concrete example of a progressive power lens.

Figure 8     shows the distribution of spherical power for a concrete example of the second exemplary embodiment.

Figure 9     shows the distribution of residual astigmatic error for the concrete example of the second exemplary embodiment.

Figure 10    shows the distribution of spherical power for a state of the art progressive power lens.

Figure 11    shows the distribution of residual astigmatic error for the state of the art progressive power lens.

The following definitions are used within the scope of the present description:

Spectacle lens

In the context of the present invention, the term "spectacle lens" refers to an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1),

Dioptric power

In the context of the present invention, the term "dioptric power" is a general term comprising the focal power and the prismatic power of a lens (DIN ISO 13666:2019, section 3.10.3). The term "focal power" is a general term including the spherical vertex power and the cylindrical vertex power of a lens (DIN ISO 13666:2019, section 3.10.2), where the term "vertex power" refers to the reciprocal of the paraxial vertex focal length (DIN ISO 13666:2019, section 3.10.7), which represents the distance between the vertex of the lens and the focus.

Distance power

In the context of the present invention, the term "distance power" refers to the dioptric power for distance vision (DIN ISO 13666:2019, section 3.16.1).

Near power

In the context of the present invention, the term "near power" refers to the dioptric power for near vision (DIN ISO 13666:2019, section 3.16.2).

Spherical power

In the context of the present invention, the term "spherical power" refers to the value of the back vertex power of a spherical-power lens or the back vertex power in one of the two principal meridians of an astigmatic-power lens, depending on the principal meridian chosen for reference (DIN ISO 13666:2019, section 3.12.2)

Progressive power lens

In the context of the present invention, the term, a "progressive power lens" is a power-variation lens with two reference points for focal power, generally designed to provide correction for presbyopia and clear vision from distance to near (DIN ISO 13666:2019, section 3.7.8), where a power variation-lens is a spectacle lens with a smooth variation of focal power over part or all of its area, without discontinuity, designed to provide more than one focal power (DIN ISO 13666:2019, section 3.7.7).

Addition

In the context of the present invention, the term "addition", also called addition power, applies to the difference between the vertex power of the near portion and the vertex power of the distance portion (DIN ISO 13666:2019, section 3.16.3).

Distance portion

In the context of the present invention, the term "distance portion" refers to a portion of a progressive-power lens having the dioptric power for distance vision (DIN ISO 13666:2019, section 3.15.1).

Near portion

In the context of the present invention, the term "near portion" refers to a portion of a progressive-power lens having the dioptric power for near the vision distance (DIN ISO 13666:2019, section 3.15.3).

Corridor

In the context of the present invention, the term "corridor" refers to a portion of a power-variation lens providing the intended change in focal power (DIN ISO 13666:2019, section 3.15.26). As used throughout the present specification the term "corridor" denotes a zone in the progressive power lens.

Umbilical line

In the context of the present invention, the term "umbilical line" refers to line of minimum cylindrical surface power on the power-variation surface of the progressive power lens (see DIN ISO 13666:2019, section 3.15.26).

Distance vision

In the context of the present invention, the term "distance vision" is used for vision when gazing at an object of interest with the object being at an object distance larger than a few meter, typically larger two meter, where term "object distance" refers to a distance between the eye and an object in the gaze direction.

Near vision

In the context of the present invention, the term "near vision" is used for vision when gazing at an object of interest with the object being at an object distance below 0,5 meter, for example a typical reading distance like 40 cm.

Surface shape

The term "surface shape" refers to the geometry of the surface.

Spectacle lens design

In the context of the present invention, the term "spectacle lens design" is used to denominate the calculated distribution of optical properties of a spectacle lens. The spectacle lens design may be an optical spectacle lens design or a geometric spectacle lens design.

The term optical spectacle lens design is used to denominate the calculated/predetermined or defined optical properties of a spectacle lens, typically for a predetermined specific wearer, taking into consideration a position/arrangement of the spectacle lens relative to a model of an eye of the wearer of the spectacle lens, a position/arrangement of a model of an object to be viewed by the wearer of the spectacle lens for a specific use condition of the spectacle lens as well as a model of the physiological visual properties of the wearer of the spectacle lens.

Particularly, the optical spectacle lens design may comprise a distribution of optical power across an effective area of a spectacle lens as perceived by a predetermined wearer of the spectacle lens for a predetermined as-worn position relative to the wearer's (model) eye and a predetermined object distance model. The calculation of the distribution of the optical power is based on the distance and orientation of the spectacle lens relative to the model eye, the distance and orientation of the spectacle lens relative to the model object as well as physiological parameters of the spectacle wearer such as the wearer's visual deficiencies, namely e.g. the wearer's ametropia, the wearer's ability to accommodate and the wearer's pupillary distance.

The term geometric spectacle lens design means the geometry of the spectacle lens providing the calculated optical properties of a spectacle lens described in the forgoing for the spectacle wearer.

Such optical or geometric spectacle lens designs may be stored on a computer-readable (e.g. non-transitory and/or electronic and/or optical) data carrier. Moreover, spectacle lenses manufactured according to the spectacle lens design can be considered physical representations of the spectacle lens design.

An exemplary method for designing a spectacle lens may include the following steps:
In a first step, individual user data or application data of the spectacle wearer are recorded. This includes the acquisition of (physiological) data that can be assigned to the spectacle wearer and the acquisition of usage conditions under which the spectacle wearer will wear the spectacles to be designed.

The physiological data of the spectacle wearer may include e.g. the wearer's ametropia and the wearer's ability to accommodate, which are determined by means of a refraction measurement and which are regularly included in a prescription in the form of prescription values for sphere, cylinder, axis, prism and base as well as addition. Furthermore, e.g. the pupillary distance and the pupil size were determined under different lighting conditions. The age of the wearer has an influence on the ability to accommodate and pupil size and may therefore also be taken into consideration. The convergence behavior of the eyes results from the pupillary distance for different viewing directions and object distances.

The conditions of use include the as-worn position of the spectacle lenses in front of the eye (usually in relation to the eye's pivot point) and the object distances for different viewing directions under which the spectacle wearer should see clearly. The seat of the spectacle lenses in front of the eye can e.g. be determined by recording the corneal vertex distance as well as anterior and lateral inclination. These data are included in an object distance model, for which a ray tracing method can be applied.

In a subsequent step, a draft design for the spectacle lens with a large number of evaluation points is determined on the basis of this recorded data. The draft design includes target optical properties for the spectacle lens at the respective evaluation point. The target properties include e.g. the permissible deviation from the prescribed spherical and astigmatic power, taking into account the addition, distributed over the entire spectacle lens, as specified by the arrangement of the lens in front of the eye and the underlying distance model.

Furthermore, a first draft of surface shapes for the front and back surfaces as well as a first draft for a refractive index distribution over the entire spectacle lens are specified. The choice of surface shapes for the first draft generally only determines the convergence (speed and success) of the optimization method used.

In a further step, the course of main rays is determined through the large number of evaluation points. Possibly, a local wavefront can be established for each of the main rays in a vicinity of the respective main ray. According to Werner Köppen: Design and Development of Progressive Lenses, in Deutsche Optiker Zeitung DOZ 10/95, pp. 42-46, the number of evaluation points is usually in the range between 1000 and 1500. EP 2 115 527 B1 suggests a number of over 8000 evaluation points. Although the refractive index is usually dependent on the wavelength, the dispersion is generally not taken into account and the calculation is carried out for a so-called design wavelength. However, it cannot be ruled out that an optimization process takes different design wavelengths into account, e.g. is described in EP 2 383 603 B1.

In a subsequent step, the above optical properties of the spectacle lens at the evaluation points are determined by determining an influence of the spectacle lens on the beam path of the main rays and, if necessary, the local wavefronts in the vicinity of the respective evaluation point.

In a further step, the design of the spectacle lens is evaluated depending on the determined optical properties and the individual user data. The surface shape and as the case may be the refractive index distribution of the design of the spectacle lens may be modified by minimizing a target function such as e.g.

$$F = \sum_m P_m \sum_n W_n \left( T_n - A_n \right)^2$$

where $P_m$ represents the weighting at the evaluation point m, $W_n$ the weighting of the optical property n, $T_n$ the target value of the optical property n at the respective evaluation point m and $A_n$ denotes the actual value of the optical property n at the evaluation point m.

In other words, the local surface shape of the surface, i.e. the local geometry of the surface, and as the case may be the local refractive index of the spectacle lens in the respective visual beam path are modified by the evaluation points until a termination criterion is met.

In the spectacle lens design of the invention described in this application the spectacle lens design includes segments with discontinuities between neighboring segments. These discontinuities may be present in at least one of refractive index and surface shape, i.e. the surface geometry, and the sizes of the discontinuities may be used as further parameters for optimizing the spectacle lens design.

Distribution of spherical power

In the context of the present invention, the term "distribution of spherical power" refers to a distribution of spherical power across an effective area of a spectacle lens or a spectacle lens design as perceived by a wearer wearing a spectacle lens according to the spectacle lens design.

Target design

In the context of the present invention, the term "target design" refers to the specification of a distribution of allowed image aberrations over the spectacle lens or of surface properties of the spectacle lens, which should be achieved in an optimization process. In the first case, reference is made to an optical target design and reference is made to a surface target design in the second case. Accordingly, an optical target design is the specification of a distribution of image aberrations over the entire spectacle lens or else, there beyond, in the spectacle wearer beam path (e.g., astigmatic residual deviation, spherical residual deviation, prism, horizontal symmetry, distortion, or else higher order aberrations such as, e.g., coma). Additionally, the optical target design may contain specifications for the astigmatic and spherical residual deviations at reference points (e.g., distance design reference point or near design reference point) or the addition in the measurement beam path of a measuring device, e.g., in the beam path of a vertex power measuring device. By contrast, a surface target design specifies surface properties of the surface to be formed that should be achieved in the optimization process, for example a surface power and a surface astigmatism. Here, the surface power is a measure for the ability of a surface section surrounding an optimization point to change the vergence (refractive index of the spectacle lens material divided by the radius of curvature of the wavefront) of a beam incident on the surface section from the air. The surface astigmatism at an optimization point represents the difference of the surface powers in the principal meridians at an optimization point of the surface. Provided the text below does not specifically refer to an optical target design or a surface target design but only to a target design, the term "target design" should always comprise both types of target design.

Numerically represented spectacle lens

In the context of the present invention, the term "numerically represented spectacle lens" refers to a numerical data set describing the design features of a spectacle lens, in particular, the refractive index of the lens material and the curvatures of the lens surfaces.

Optimizing a numerically represented spectacle lens

Within the scope of the present invention, the term "optimizing a numerically represented spectacle lens" means carrying out a computer-assisted process, in which the numerically represented spectacle lens is described with the aid of at least one parameterized function describing the numerical representation, typically with the aid of a plurality of parameterized functions, in which a target property to be achieved by the spectacle lens is predetermined and in which a merit function is specified, the value(s) of which specifying a deviation of the property achieved by the current parameter value(s) of the parameterized function(s) from the target property, with the parameter value(s) of the parameterized function(s) being varied until the value(s) of the merit function satisfies or satisfy a termination criterion that leads to the termination of the variation of the parameter value or of the parameter values. If the target property is the surface shape, the at least one parameterized function describes the shape of the numerically represented spectacle lens' surface.

Discontinuity

In the context of the present invention, a "discontinuity" is a step in a physical quantity that is present at the boundary or interface between two parts of an object.

Segments

Within the scope of the present invention, "segments" of which a progressive power lens is composed are parts of the progressive power lens between which a discontinuity in at least one of refractive index and surface shape is present.

Central segment

In the context of the present invention, a "central segment" is a segment located such in the progressive power lens that then includes the distance portion, the near portion ant the corridor of a progressive power lens.

Peripheral segment

In the context of the present invention, a "peripheral segment" is a segment that is not the central segment. Peripheral segments are located to the left and to the right of the central segment.

Annular segment

In the context of the present invention, an "annular segment" is a segment that is limited by sections of two concentric circles.

Numerical representation of a segment

In the context of a segment, the term "numerical representation" refers to a numerical data set describing geometry and relevant physical properties of a segment. Relevant physical properties are at least surface shape and refractive index.

Border

In the context of a segment, the term "border" refers a line on the surface of contact between two segments adjoining each other.

Interface

In the context of a segment, the term "interface" refers a contact face on the surface between two segments adjoining each other.

Neighboring segments

In the context of a segment, the term "neighboring segments" refers to segments sharing a common border or interface.

Peripheral zone

In the context of the present invention, the term "peripheral zone" of a progressive power lens refers to a zone which is not optimized in order to provide a near portion, a distance portion and a corridor. In the context of the present invention, the peripheral zone is formed by the peripheral segments.

Prescription

The term "prescription" denotes a summary in which the dioptric powers necessary for correcting a diagnosed refractive error are specified in the form of suitable values. In the case of spherical power, the prescription may contain a value "sph" for sphere. In the case of astigmatic power, the prescription can contain values "cyl" for cylinder and "axis" for axis, and, in the case of prismatic power, the prescription can contain a prism value. Moreover, the prescription may contain further values, for example the "add" value in the case of multifocal spectacle lenses, said "add" value specifying the difference between the vertex power in the near portion of the spectacle lens and in the distance portion of the spectacle lens. A value "PD" for the interpupillary distance may also be contained in the prescription.

Ray of light

a ray of light is a line or curve being perpendicular to the propagating light's wavefronts.

Refractive index

The term "refractive index" of a material refers to the ratio of the velocity of propagation of monochromatic radiation of a given wavelength in vacuum to its velocity of propagation in said material (compare also DIN ISO 13666:2019, section 3.1.5).

Residual astigmatic error

In the context of the present invention, the term "residual astigmatic error" refers to the deviation of the cylindrical power provided by a spectacle lens from the cylindrical power according to the prescription.

Geometric center of an annular segment

In the context of the present invention, the "geometric center of an annular segment" refers to the geometric center of the concentric circles limiting the annular segment.

Cover element

In the context of the present invention, the term "cover element" refers to an element covering a surface of a spectacle lens. The cover element may, in particular cover the front surface or the rear surface of a spectacle lens.

Cemented

In the context of the present invention, two elements are considered to be cemented if they are bonded to each other by means of a cement.

Cement

In the context of the present invention, the term "cement" is used for a transparent adhesive used for bonding mineral or organic glass materials.

Optimized surface

In the context of the present invention, an "optimized surface" is a surface that is the result of optimizing a surface of a numerically represented spectacle lens.

Composing a spectacle lens design

In the context of the present invention, the term "composing a spectacle lens design" refers to a process putting together the spectacle lens design from numerical representations of segments.

Principal meridian

In the context of the present invention, the term "principal meridian" refers to a meridian of a surface with the maximum or the minimum curvature, where a meridian is a plane that contains the center of surface of the plane's curvature (see DIN ISO 13666:2019, sections 3.2.11 and 3.4.5).

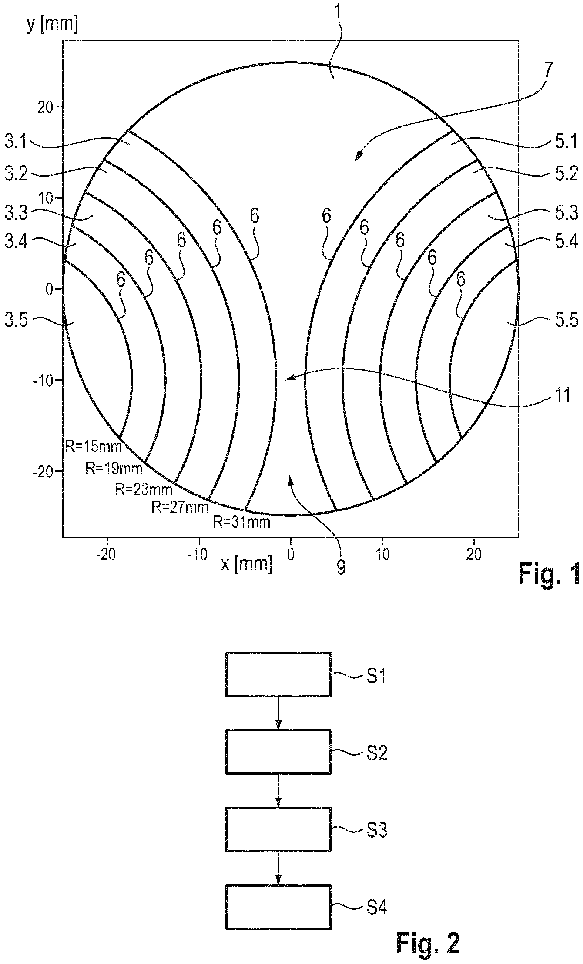

The basic structure of an inventive progressive power lens will be described with respect to in figure 1, which schematically shows an exemplary embodiment of a circular progressive power lens which is composed of eleven segments 1, 3.1-3.5, 5.1-5.5 in a plan view. The circular progressive power lens, which has a diameter of 50 mm in the present exemplary embodiment represents a finished but uncut spectacle lens, i.e. a spectacle lens as it is before glazing. Although the progressive power lens described above in the exemplary embodiment has a diameter of 50 mm it may have a different diameter, for example a diameter in the range of 40 mm to 60 mm like 40 mm, 45 mm, 55 mm or 60 mm. Figure 1 also shows circular lines 6 representing the boundaries between these segments 1, 3.1-3.5, 5.1-5.5 and coordinates in the x-y-plane which is the plane of the plan view.

The segments 1, 3.1-3.5, 5.1-5.5 the progressive power lens is composed of include a central segment 1 that forms a distance portion 7, a near portion 9 and a corridor 11 of the progressive power lens. Five further segments 3.1-3.5 are located to the left of the central segment 1 and another five segments 5.1-5.5 are located to the right of the central segment 1. The segments 3.1-3.5, 5.1-5.5 on the left and on the right of the central segment 1 are annular segments, except for the respective outermost segment 3.5 and 5.5 which has a shape given by a circular line intersecting the circular outer edge of the progressive power lens. In the exemplary embodiment, the circular lines 6 representing the boundaries of the annual segments 3.1-3.5 have a radii (from the left to the right in figure 1) of 15 mm, 19 mm, 23 mm, 27 mm and 31 mm. The centers of these circles are all located at x = -32.5 mm and y = -10 mm. The radii of the circular lines 6 representing the boundaries of segments 5.1 to 5.5 are (from the right to the left in figure 1) 15 mm, 19 mm, 23 mm, 27 mm and 31 mm, and the centers of these circles are all located at x = 32.5 mm and y = -10 mm. The radius of the outer rim of the progressive power lens is 25 mm with the center being located at x = 0 and Y = 0.

The size and position of the annular segments 3.1-3.5, 5.1-5.5 give the central segment 1 a shape of an hourglass with an upper wide portion, a lower wide portion and a neck between the upper wide portion and the lower wide portion. As the centers of the circular lines representing the boundaries of segments 3.1-3.5, 5.1-5.5 have e negative value of the y-coordinate the width of the upper wide portion is greater than the width of the lower wide portion. The surface shape of the central segment is optimized such that the upper wide portion provides the distance portion 7, the lower wide portion of forms the near portion 9, and the neck forms the corridor 11.

In the present exemplary embodiment, the surface shape of the segments is such that steps in the front surface are present at the circular lines 6 representing the boundaries between neighboring segments 1, 3.1-3.5, 5.1-5.5. However, in other embodiments, the segments 1, 3.1-3.5, 5.1-5.5 may differ from each other in their refractive indices with steps in the refractive indices being present at the interfaces between neighboring segments 1, 3.1-3.5, 5.1-5.5. In addition, it is also possible to have steps in the surface shapes at all or some of the circular lines 6 representing the boundaries between neighboring segments 1, 3.1-3.5, 5.1-5.5 and steps in the refractive indices at all or some of the interfaces between neighboring segments1, 3.1-3.5, 5.1-5.5. A progressive power lens as described above may be manufactured by cutting is from a lens blank on the basis of a spectacle lens design. The lens design is typically determined by use of a computer implemented method for optimizing at least one surface of a numerically represented spectacle lens. In a first step of the method, the at least one surface of the numerically represented spectacle lens is optimized such that the numerically represented spectacle with the optimized surface provides a distance portion, a near portion, and a corridor extending between the distance position and the near portion. The first step can be performed with a state of the art method of determining a spectacle lens design for a progressive power lens. The computer implemented method used for determining a lens design for the progressive power lens as described with respect to figure 1 includes a second step in which the spectacle lens design for the progressive power lens is composed from numerical representations of segments with discontinuities between neighboring segments in at least one of refractive index and surface shape. These segments include a central segment being a segment of the numerically represented spectacle lens with the optimized surface determined in the first step. The steps of an exemplary embodiment of the inventive computer implemented method for optimizing at least one surface of a numerically represented spectacle lens will be described with respect to figure 2.

In a first step S1 of the computer implemented method of determining the spectacle lens design, a computer or any other suitable data processing system receives prescription values including at least a value for sphere, a value for cylinder, and a value for addition. Based on these values and a suitable target design at least one lens surface of a numerical representation of a spectacle lens is optimized in step S2 by means of any method known in the state of the art for optimizing surfaces of progressive power lenses. The result is a numerical representation of a state of the art progressive power lens.

In step S3, a layout for a central segment 1 and peripheral segments 3.1 to 3.5 and 5.1 to 5.5, i.e. the number of peripheral segments, their shapes, their width, and so on, is defined. In the present exemplary embodiment, the layout of the peripheral segments 3.1-3.5 and 5.1-5.5 is given by circular lines 6 representing the boundaries between numerically represented neighboring segments 1, 3.1-3.5, 5.1-5.5. The circular lines 6 on both sides of the central segment 1 with the biggest radius also define the layout of the numerically represented central segment 1. As the centers of all circular lines 6 that lie on the same side of the central segment 1 coincide, the numerically represented peripheral segments 3.1-3.4, 5.1-5.4 are annular segments, except for the outermost segments 3.5, 5.5 on each side of the central segment 1. It should be mentioned that although fife peripheral segments are present on both sides in the present exemplary embodiment, a different number of peripheral segments could be present in alternative embodiments. For example, four or six numerically represented peripheral segments could be present on each side of the central segment 1. However, the peripheral segments should include at least two segments on each side of the central segment 1. Although the maximum number of segments on each side of the central segment is not limited, for practical reasons the maximum number of segments on each side of the central segment 1 would be 10 or less, for example 8 segments or 7 segments.

Once the layout of the segments, i.e. their number, their width, the radii of the circles defining the segments, the location of the center of the circles, and so on, is defined a segment of the numerically represented spectacle lens with the optimized surface, i.e. a segment of the numerical representation of a state of the art progressive power lens optimized in step S2, is taken in step S4 as the numerically represented central segment 1. Hence, the surface of the numerically represented central segment 1 is given by the respective section of the surface of the progressive power lens optimized in step S2 so that the surface of the numerically represented central segment 1 defines a distance portion 7, a near portion 9 and a corridor 11 extending from the distance portion 7 to the near portion 9. In addition, the surfaces of the peripheral segments are optimized in step S4. In the optimization, the sizes of steps between surfaces of neighboring numerically represented segments 1, 3.1-3.4, 5.1-5.4 are used as parameters in addition to parameters defining the surface curvature. For the optimization, a threshold is given for the residual astigmatic error which shall not be exceeded with the optimized spectacle lens. In addition, thresholds for the steps focal power at the boundaries between neighboring segments and the steps in the directions by which rays of light are refracted by the surfaces of the segments at the borders between neighboring segments are given. In the present exemplary embodiment, the threshold for the residual astigmatic error which shall not be exceeded is 1.0 D, the threshold for the step in focal power at the boundaries between neighboring segments is 0.5 D, and the threshold for the step in the directions by which rays of light are refracted is 2 degree. However, other thresholds could be used as well. For example, the threshold for the residual astigmatic error could be higher or lower than 1.0 D, for example, 1.25 D or 0.75 D or even lower like, for example 0.5 D. However, a threshold of 1.0 D already leads to a progressive power lens that provides higher comfort for a wearer than a state of the art progressive addition lens. The threshold for the steps in focal power at the boundaries between neighboring segments should not exceed 1.0 D and may be 0.5 D or less, for example 0.25 D or less. However, a value of 0.5 D already leads to a comfortable progressive power lens. The steps in the directions by which rays of light are refracted which are present at the borders between neighboring segments should be small in order to avoid noticeable double images. If the step in the directions by which rays of light are refracted is not larger than 0.5 degree double images that would reduce the comfort for the wearer of the progressive power lens can be kept at a very low level. However, steps in the directions by which rays of light are refracted as large as 1 degree may be allowable in certain areas of the progressive power lens although steps not larger than 0.5 degree, in particular steps of 0.2 degree or less are preferable. For example, the steps may lie in the range between 0.1 or less and 1 degree and in particular between 0.1 or less and 0.5 degree, preferably in the range between 0.05 or less and 0.5 degree and in particular in the range between 0.05 or less and 0.2 degree. Moreover, the thresholds do not need to be global thresholds that are applicable to all of the segments. It is possible to have more restrictive thresholds for segments closer to the central segment 1 than for segments further away from the central segment 1 as imaging errors at the outer rim of the peripheral zone are less disturbing than imaging errors at the inner rim of the peripheral zone, i.e. the rim to towards the central segment 1. Hence, it would be possible to have thresholds at the lower end of the ranges giving above for the segments 3.1. and 5.1 in figure 1 and thresholds at the upper end of the ranges given above for the segments 3.5 and 5.5 with the thresholds between the lower end and the upper end for the intermediate segments. In the optimization process the surface of the central segment is not further optimized in order to keep the surface defining the distance portion 7, the near portion 9 and the corridor 11 which has been optimized in step S2 unchanged.

With the described optimization process, a lower residual astigmatic error in the direction perpendicular to the corridor, i.e. perpendicular to the umbilical line, can be achieved than the Minkwitz theorem allows. Thus, a lower residual astigmatic error than can be achieved in the peripheral zones of state of the art progressive power lenses can be achieved with the inventive progressive power lens.

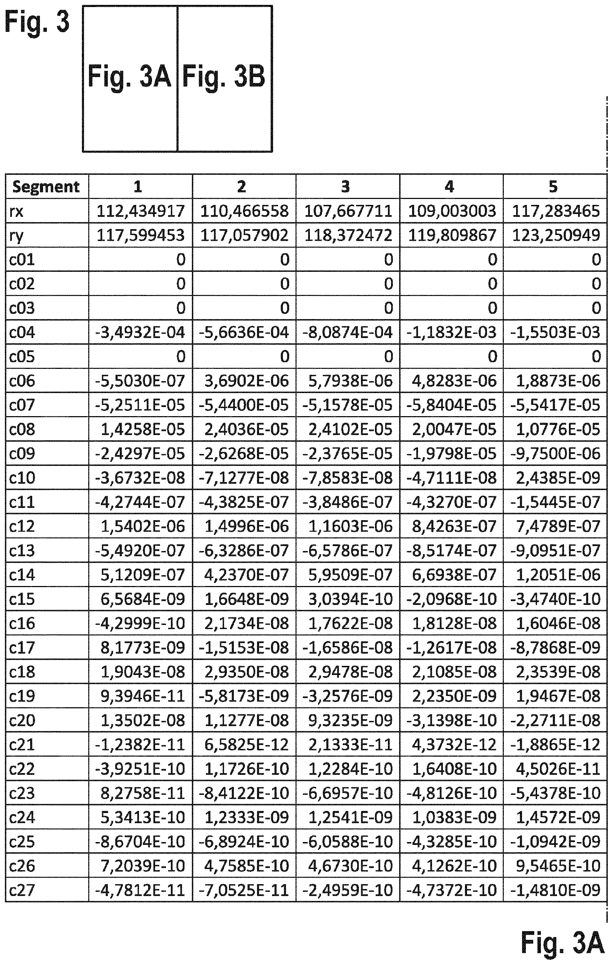

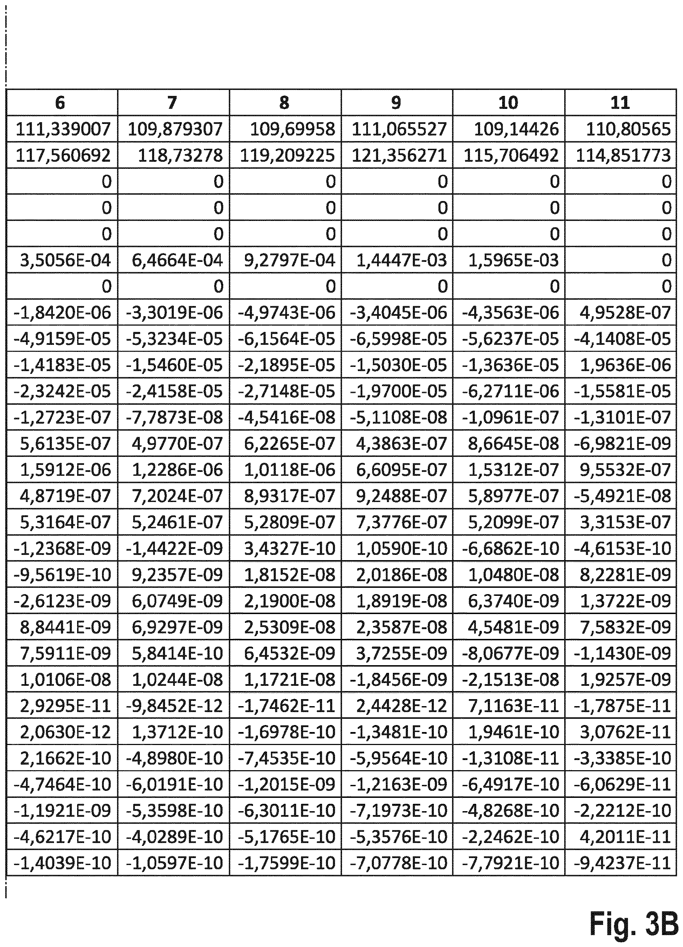

A concrete example for the first exemplary embodiment of the inventive progressive power lens will be described with respect to figures 3 to 5. The surfaces of the segments are given by the equation

$$z(x,y) = c_{01}y + c_{02}x + c_{03}y^2 + c_{04}xy + c_{05}x^2 + c_{06}y^3 + c_{07}xy^2 + c_{08}x^2y + c_{09}x^3 + c_{10}y^4$$
$$+ c_{11}xy^3 + c_{12}x^2y^2 + c_{13}x^3y + c_{14}x^4 + c_{15}y^5 + c_{16}xy^4 + c_{17}x^2y^3 + c_{18}x^3y^2 + c_{19}x^4y$$
$$+ c_{20}x^5 + c_{21}y^6 + c_{22}xy^5 + c_{23}x^2y^4 + c_{24}x^3y^3 + c_{25}x^4y^2 + c_{26}x^5y + c_{27}x^6$$
$$+ \frac{\rho_x x^2 + \rho_y y^2}{\sqrt{-\rho_x^2 x^2 - \rho_y^2 y^2 + 1} + 1}$$

in which z(x,y) represents the surface height of the surface above an x-y-reference plane, $\rho_x$ represents the reciprocal radius of curvature $r_x$ of the surface in a first principal meridian running in x-direction, $\rho_y$ represents the reciprocal radius of curvature $r_y$ in a second principal meridian running in y-direction, and $c_{01}$ to $c_{27}$ are coefficients of the surface. The values of the radii of curvature $r_x$ and $r_y$ of the respective segments surfaces in the first and second principal meridians as well as the coefficients $c_{01}$ to $c_{27}$ of the respective segments' surfaces are given in the table of figure 3. The progressive power lens of the first concrete example has middle thickness of 2 mm, a sphere value of 0.0 D, a cylinder value of 0.0 D, and an addition of 2.0 D. The refractive index of the glass material is 1.59.

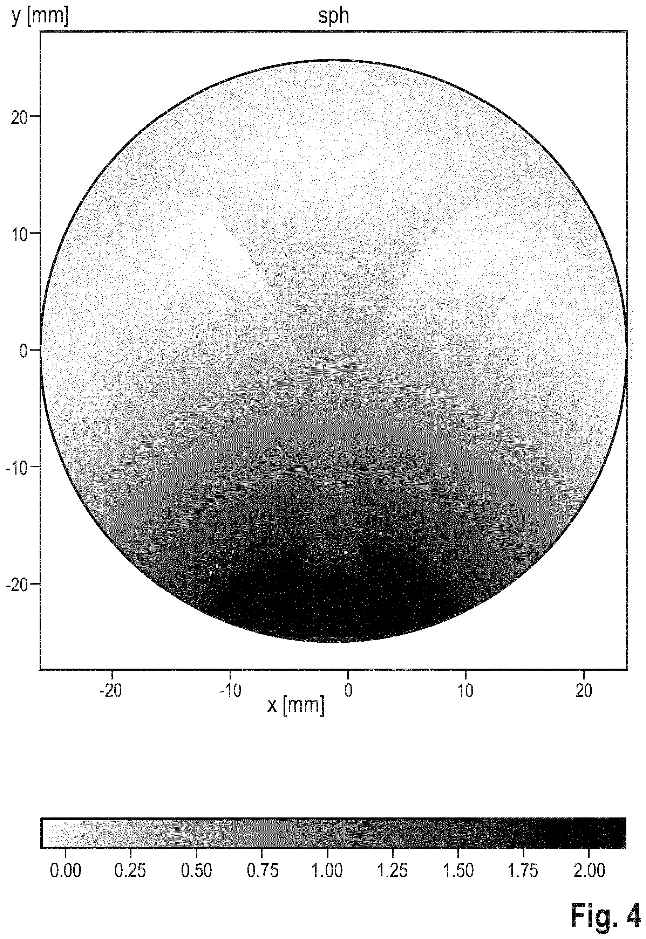

The progressive power lens with the parameters described in the table of figure 3 has been optimized according to the method described with respect to figure 2. The resulting distribution of spherical power for this concrete example of a progressive power lens is shown in figure 4. It can be seen that the central segment provides a smooth transition between the distance power and the near power along the corridor and that there are only small steps in spherical power between neighboring segments in the peripheral zones.

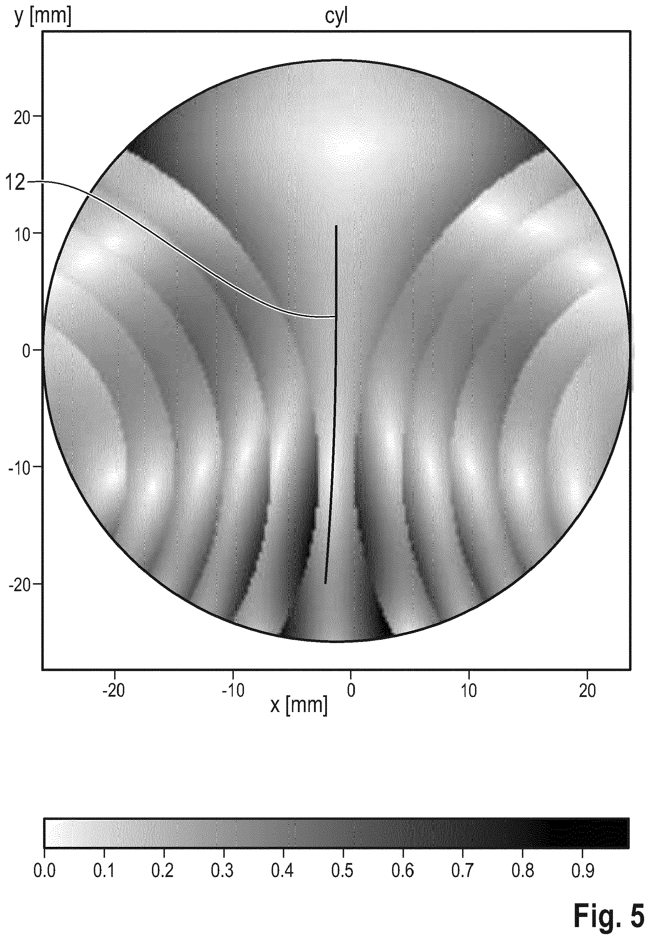

Figure 5 shows the residual astigmatic error of the progressive power lens according to the first concrete example. It can be seen from the figure that a residual astigmatic error of 1.0 D is not exceeded in the whole area of the progressive power lens and that the residual astigmatic error is less than 0.75 D in more than 90 % of the area. Moreover, only a small increase of the astigmatic error in a direction perpendicular to the umbilical line 12 is present.

Moreover, the steps in the directions by which rays of light are refracted which are present at the borders between neighboring segments are smaller than 0.5 degree in the progressive power lens of the present concrete example and in most parts of the progressive power lens of the present concrete example much smaller than 0.5 degree.

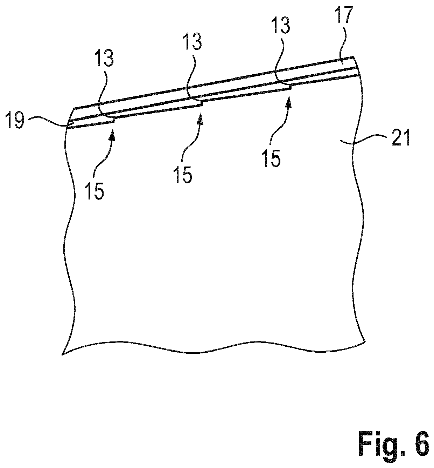

A second exemplary embodiment of a progressive power lens according to the invention will be described with respect to figures 6 to 9.

As in the first exemplary embodiment, the surface of the progressive power lens according to the second exemplary embodiment includes steps 13 in the front surface at the boundaries 15 between neighboring segments. In order to have a progressive power lens with a smooth surface the surface with a step 13 is covered by a cover element 17 in the second exemplary embodiment, as it is schematically shown in figure 6. The cover element 17 is cemented to the surface by means of a cement 19, which has a refractive index that differs from the refractive index of the base material 21 of the progressive lens. The refractive index of the cover element 17 is identical to the refractive index of the base material 21. However, it would also be possible to have a cover element made from a material with a refractive index that is different to the refractive index of the base material 21.

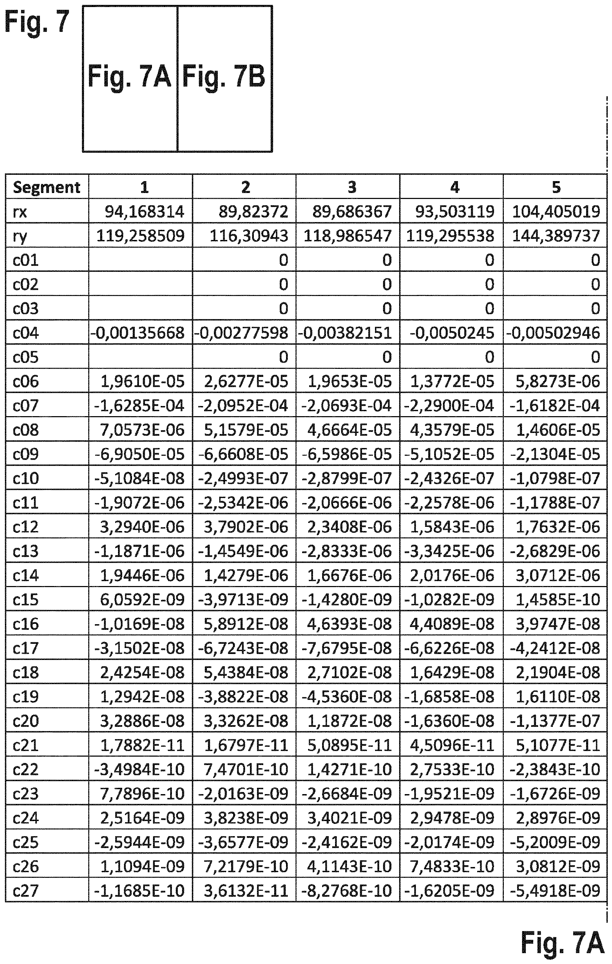

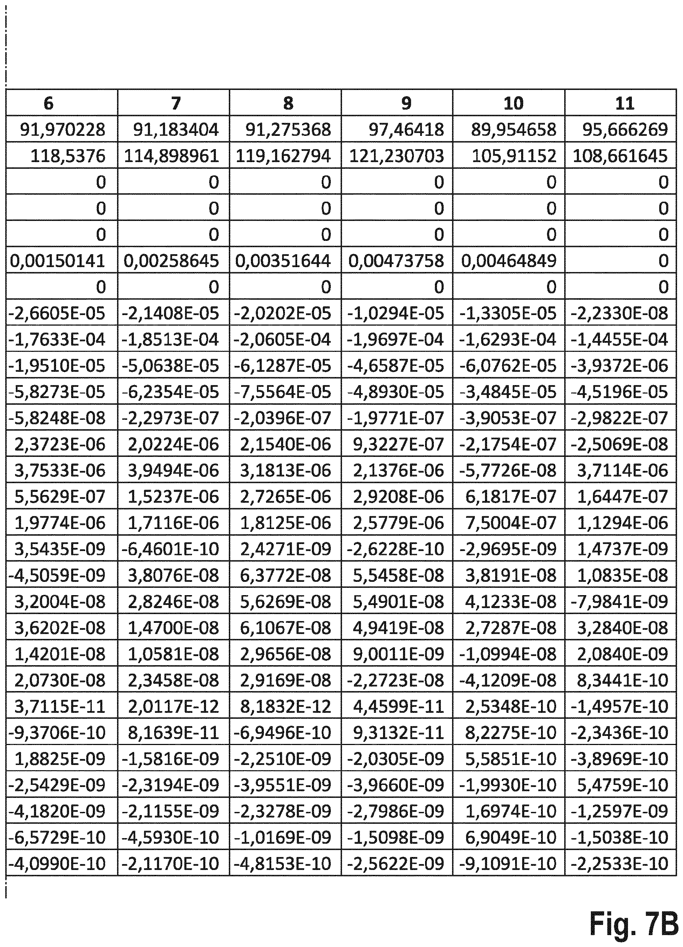

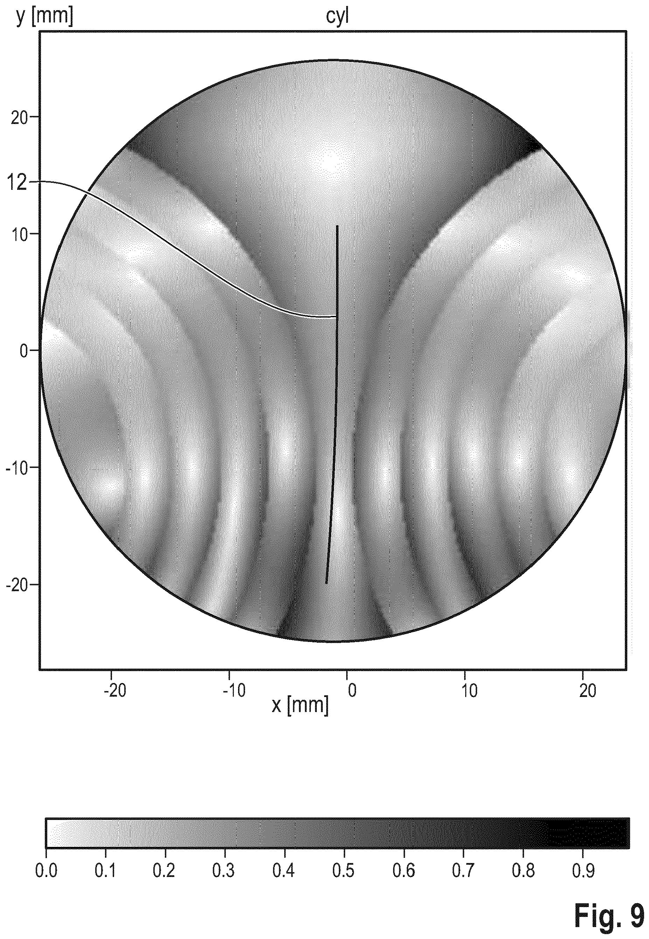

A concrete example for the second exemplary embodiment of the inventive progressive power lens is shown in figures 7 and 9. The refractive index of the base material is the same as in the first concrete example, namely n = 1.59. However, the lens is thicker as in the first concrete example which is due to the cover element 7. Like in the first concrete example the value for a sphere is 0.0 D the value for cylinder is 0.0 D and the value for addition is 2.0 D. The surface height, i.e. the z-coordinate of the surface, is described by the same equation as in the first concrete example. The values of the radii of curvature $r_x$ and $r_y$ of the respective segments' surfaces in the first and second principal meridians as well as the coefficients $c_{01}$ to $c_{27}$ of the respective segments' surfaces are given in the table of figure 7.

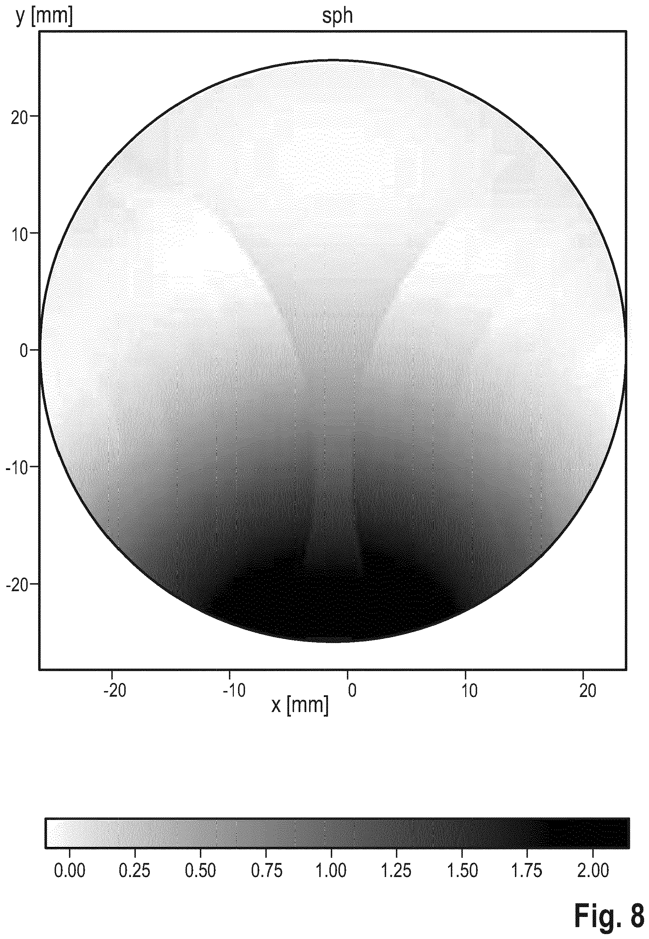

Figure 8 shows the distribution of spherical power over the area of the spectacle lens. It can be seen from figure 8 that the steps in spherical power between neighboring segments are further reduced as compared to the first concrete example shown in figure 4. Like in the first concrete example a smooth transition between the distance power and the near power is present in the central segment.

The distribution of residual astigmatic error achieved with the progressive power lens of the second concrete example is shown in figure 9. It can be seen from figure 9 that in most of the area of the progressive power lens the residual astigmatic error does not exceed 0.5 D and is lower than in the first concrete example. The residual astigmatic error does almost not increase in the direction perpendicular to the umbilical line 12. Hence, the progressive power lens of the second concrete example is very comfortable for the wearer.

Moreover, like in the concrete example for the progressive power lens of the first exemplary embodiment, the steps in the directions by which rays of light are refracted which are present at the borders between neighboring segments are smaller than 0.5 degree in the progressive power lens of the present concrete example and in most parts of the progressive power lens of the present concrete example much smaller than 0.5 degree.

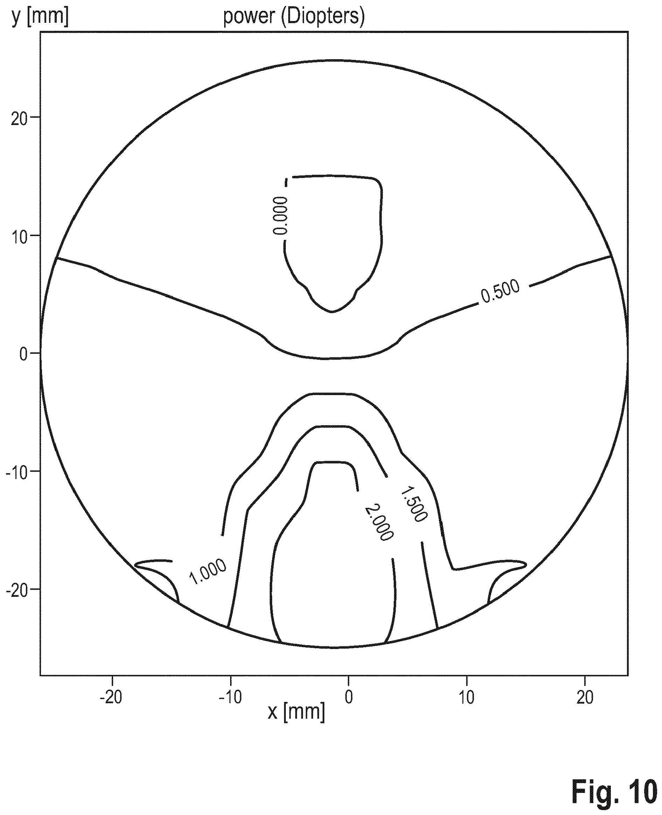

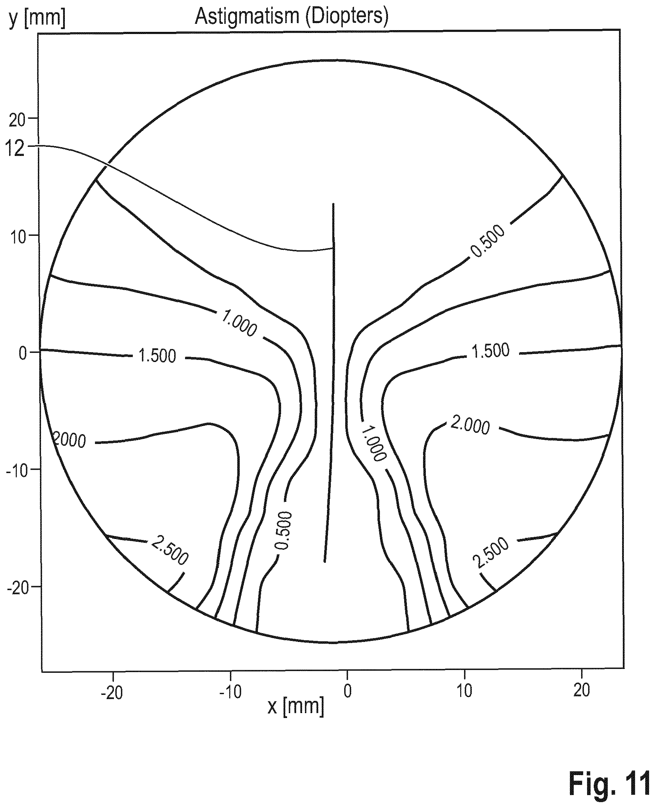

For comparison with the first and second concrete examples of the inventive progressive power lenses the distributions of spherical power and residual astigmatic error over the area of a state of the art progressive power lens are shown in figure 10 and figure 11, respectively. Comparing figures 5, 9 and 11 shows that the residual astigmatic error of the state of the art progressive power lens increases much faster in the direction perpendicular to the umbilical line 12 than it does in the concrete examples of the inventive progressive power lens while comparing figures 4, 8 and 10 shows that the distribution of spherical power of the concrete examples of the inventive progressive power lens is comparable to that of the state of the art progressive power lens. In fact, the size of the lens portion in which the spherical power does not deviate by more than 0.25 D from the distance power is increased as compared to the state of the art progressive power lenses which means that the usable distance portion is larger in the inventive progressive power lens than state of the art progressive power lens.

The present invention has been described with respect to exemplary embodiments for illustrative reasons. However, a persons skilled in the art recognize that deviations from the exemplary embodiments are possible within the scope of the present invention. For example, instead of having steps in the height of the front surface of the progressive power lens, the steps could be present in the rear surface of the progressive power lens, or steps could be present on both surfaces of the progressive power lens which could reduce the height of the steps that are present in each surface. In case steps are present in the rear surface, the rear surface may be covered by a cover element, and in case, steps are present in both the front surface and the rear surface, cover elements may cover the front surface and the rear surface. In addition, instead of having steps in the height of the surface the segments could differ in their refractive indices with steps in the refractive index at the interfaces between neighboring segments. In the segments themselves a continuous variation of the refractive index would be possible. This would offer the possibility to determine the refractive power of the progressive power lens by the distribution of the refractive index rather than the shape of the surface. In addition, it would also be possible to provide a distribution in refractive power by a combination of the surface shape and the refractive indices of the segments which would lead to steps in the height of the surface at the boundaries between neighboring segments and to steps in the refractive index at the interfaces between neighboring segments. Different refractive indices can be realized by differently doping the segments of the progressive power lens. Differently doping could mean different densities of the same dopant in different segments or different dopants in different segments. Moreover, different dopants could be combined with different dopant densities. For doping the segments differently masks can be used for masking different areas of the progressive power lens during different doping process. In addition, in difference to the exemplary embodiment, which utilizes annular peripheral segments, segments with other shapes may be utilized, e.g. segments with polygonal shapes or segments having irregular shapes. Hence, the present invention shall not be restricted by the exemplary embodiments but only by the appended claims.

**Claims**

1. A spectacle lens design for a progressive power lens with a distance portion (7), a near portion (9), a corridor (11) extending between the distance position (7) and the near portion (9), and peripheral zones delimited by the distance portion (7), the near portion (9) and the corridor (11),
   **characterized in that**
   the spectacle lens design is composed of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1-5.5) include a central segment (1) forming the distance portion (7), the near portion (9) and the corridor (11), and peripheral segments (3.1-3.5, 5.1-5.5) forming the peripheral zones.

2. The spectacle lens design as claimed in claim 1, **characterized in that** combinations of refractive indices and surface shapes are assigned such to each segment (1, 3.1-3.5, 5.1-5.5) that a residual astigmatic error does not exceed a given threshold.

3. The spectacle lens design as claimed in claim 1 or claim 2, **characterized in that** the combinations of refractive indices and surface shapes are assigned such to each segment (1, 3.1-3.5, 5.1-5.5) that steps in focal power at the borders (6) between neighboring segments (1, 3.1-3.5, 5.1-5.5) are not larger than 1.0 D.

4. The spectacle lens design as claimed in any one of the claims 1 to 3, **characterized in that** combinations of refractive indices and surface shapes are assigned such to each segment (1, 3.1-3.5, 5.1-5.5) that steps in the directions by which rays of light are refracted by the surfaces of the segments (1, 3.1-3.5, 5.1-5.5) at the borders (6) between neighboring segments (1, 3.1-3.5, 5.1-5.5) are not larger than 1 degree.

**5.** The spectacle lens design as claimed in any one of the claims 1 to 4, **characterized in that**, the peripheral segments (3.1-3.5, 5.1-5.5) are annular segments.

**6.** The spectacle lens design as claimed in claim 5, **characterized in that** all annular segments (3.1-3.5, 5.1-5.5) located on the same side of the corridor (11) have the same geometric center.

**7.** The spectacle lens design as claimed in any of the preceding claims, **characterized in that** the discontinuities include discontinuities in the height of the surfaces as discontinuities in the surface shape, where the discontinuities in the height of the surfaces lead to steps (13) between the surfaces of neighboring segments (1, 3.1-3.5, 5.1-5.5), and the steps (13) are covered by a cover element (17) cemented to the surfaces including the steps (13).

**8.** The spectacle lens design as claimed in claim 7, **characterized in that** the refractive index of the cement (19) differs at least from one of the refractive index of the segments (1, 3.1-3.5, 5.1-5.5) and the refractive index of the cover element (17).

**9.** A computer implemented method of determining a spectacle lens design for a progressive power lens comprising a step of optimizing at least one surface of a numerically represented spectacle lens such that the numerically represented spectacle lens with the optimized surface provides a distance portion (7), a near portion (9), and a corridor (11) extending between the distance position (7) and the near portion (9),
**characterized in**
a step of composing the spectacle lens design from numerical representations of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1 - 5.5) include a central segment (1) being a segment of the numerically represented spectacle lens with the optimized surface, and peripheral segments (3.1-3.5, 5.1-5.5) forming the peripheral zones..

**10.** The computer implemented method as claimed in claim 9, **characterized in** combinations of refractive indices and surface shapes of the segments (1, 3.1-3.5, 5.1-5.5) are optimized such that a residual astigmatic error does not exceed a given threshold.

**11.** The computer implemented method as claimed in claim 9 or claim 10, **characterized in that** combinations of refractive indices and surface shapes of the segments (1, 3.1-3.5, 5.1-5.5) are optimized such that steps in focal power at the borders between neighboring segments (1, 3.1-3.5, 5.1-5.5) are not larger than 1.0 D

**12.** The computer implemented method as claimed in any one of the claims 9 to 11, **characterized in that** combinations of refractive indices and surface shapes of the segments (1, 3.1-3.5, 5.1-5.5) are optimized such that steps in the directions by which rays of light are refracted by the surfaces of the segments (1, 3.1-3.5, 5.1-5.5) at the borders between neighboring segments (1, 3.1-3.5, 5.1-5.5) are not larger than 1 degree.

**13.** A computer program for determining a spectacle lens design for a progressive power lens, the computer program comprising instructions that, when executed on a computer, prompt the computer to optimize at least one surface of a numerically represented spectacle lens such that the numerically represented spectacle with the optimized surface provides a distance portion (7), a near portion (9), and a corridor (11) extending between the distance position (7) and the near portion (9),
**characterized in that**
the computer program comprises instructions that, when executed on a computer, prompt the computer to compose the spectacle lens design from numerical representations of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1-5.5) include a central segment (1) being a segment of the numerically represented spectacle lens with the optimized surface, and peripheral segments (3.1-3.5, 5.1-5.5) forming the peripheral zones..

**14.** A non-volatile computer readable storage medium with instructions stored thereon for determining a spectacle lens design for a progressive power lens, the instructions, when executed on a computer, prompt the computer to optimize at least one surface of a numerically represented spectacle lens such that the numerically represented spectacle with the optimized surface provides a distance portion (7), a near portion (9), and a corridor (11) extending between the distance position (7) and the near portion (9),
**characterized in that**
the instructions, when executed on a computer, prompt the computer to compose the spectacle lens design from numerical representations of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1-5.5) include a central segment (1) being a segment of the numerically represented spectacle lens with the optimized surface, and peripheral segments (3.1-3.5, 5.1-5.5) forming the peripheral zones..

15. A data processing system for determining a spectacle lens design for a progressive power lens, comprising a processor and at least one memory, where the processor is configured, on the basis of instructions of a computer program stored in the memory, to optimize at least one surface of a numerically represented spectacle lens such that the numerically represented spectacle with the optimized surface provides a distance portion (7), a near portion (9), and a corridor (11) extending between the distance position (7) and the near portion (9),
**characterized in that**
the processor is configured, on the basis of the instructions of the computer program stored in the memory, to compose the spectacle lens design from numerical representations of segments (1, 3.1-3.5, 5.1-5.5) with discontinuities between neighboring segments (1, 3.1-3.5, 5.1-5.5) in at least one of refractive index and surface shape, where the segments (1, 3.1-3.5, 5.1-5.5) include a central segment (1) being a segment of the numerically represented spectacle lens with the optimized surface, and peripheral segments (3.1-3.5, 5.1-5.5) forming the peripheral zones..

16. A method of manufacturing a progressive power lens, **characterized in** forming segments (1, 3.1-3.5, 5.1-5.5) of the progressive power lens according to the spectacle lens design as claimed in any of the claims 1 to 8.

17. The method as claimed in claim 16, **characterized in that** for setting refractive indices of the segments (1, 3.1-3.5, 5.1-5.5) according to the spectacle lens design the segments (1, 3.1-3.5, 5.1-5.5) are doped with at least one of dopant materials and dopant densities varying between at least two of the segments (1, 3.1-3.5, 5.1-5.5).

18. The method as claimed in claim 16 or claim 17, **characterized in that**

- the segments (1, 3.1-3.5, 5.1-5.5) are formed such that the discontinuities include discontinuities in the height of the surfaces as discontinuities in the surface shape, where the discontinuities in the height of the surfaces lead to steps (13) between the surfaces of neighboring segments (1, 3.1-3.5, 5.1-5.5), and
- cementing a cover element (17) to the surfaces including the steps (13).

19. A progressive power lens with a distance portion (7), a near portion (9), a corridor (11) extending between the distance position (7) and the near portion (9), and peripheral zones delimited by the distance portion (7), the near portion (9) and the corridor (11),
**characterized in that**
the progressive power lens is composed of segments (1, 3.1-3.5, 5.1-5.5) with discontinuities between neighboring segments (1, 3.1-3.5, 5.1 - 5.5) in at least one of refractive index and surface shape, where the segments (1, 3.1-3.5, 5.1-5.5) include a central segment (1) forming the distance portion (7), the near portion (9) and the corridor (11), and peripheral segments (3.1-3.5, 5.1-5.5) forming the peripheral zones.

Fig. 1

Fig. 2

# Fig. 3

| | Fig. 3A | Fig. 3B |
|---|---|---|
| | | |

| Segment | 1 | 2 | 3 | 4 | 5 |
|---|---|---|---|---|---|
| rx | 112,434917 | 110,466558 | 107,667711 | 109,003003 | 117,283465 |
| ry | 117,599453 | 117,057902 | 118,372472 | 119,809867 | 123,250949 |
| c01 | 0 | 0 | 0 | 0 | 0 |
| c02 | 0 | 0 | 0 | 0 | 0 |
| c03 | 0 | 0 | 0 | 0 | 0 |
| c04 | -3,4932E-04 | -5,6636E-04 | -8,0874E-04 | -1,1832E-03 | -1,5503E-03 |
| c05 | 0 | 0 | 0 | 0 | 0 |
| c06 | -5,5030E-07 | 3,6902E-06 | 5,7938E-06 | 4,8283E-06 | 1,8873E-06 |
| c07 | -5,2511E-05 | -5,4400E-05 | -5,1578E-05 | -5,8404E-05 | -5,5417E-05 |
| c08 | 1,4258E-05 | 2,4036E-05 | 2,4102E-05 | 2,0047E-05 | 1,0776E-05 |
| c09 | -2,4297E-05 | -2,6268E-05 | -2,3765E-05 | -1,9798E-05 | -9,7500E-06 |
| c10 | -3,6732E-08 | -7,1277E-08 | -7,8583E-08 | -4,7111E-08 | 2,4385E-09 |
| c11 | -4,2744E-07 | -4,3825E-07 | -3,8486E-07 | -4,3270E-07 | -1,5445E-07 |
| c12 | 1,5402E-06 | 1,4996E-06 | 1,1603E-06 | 8,4263E-07 | 7,4789E-07 |
| c13 | -5,4920E-07 | -6,3286E-07 | -6,5786E-07 | -8,5174E-07 | -9,0951E-07 |
| c14 | 5,1209E-07 | 4,2370E-07 | 5,9509E-07 | 6,6938E-07 | 1,2051E-06 |
| c15 | 6,5684E-09 | 1,6648E-09 | 3,0394E-10 | -2,0968E-10 | -3,4740E-10 |
| c16 | -4,2999E-10 | 2,1734E-08 | 1,7622E-08 | 1,8128E-08 | 1,6046E-08 |
| c17 | 8,1773E-09 | -1,5153E-08 | -1,6586E-08 | -1,2617E-08 | -8,7868E-09 |
| c18 | 1,9043E-08 | 2,9350E-08 | 2,9478E-08 | 2,1085E-08 | 2,3539E-08 |
| c19 | 9,3946E-11 | -5,8173E-09 | -3,2576E-09 | 2,2350E-09 | 1,9467E-08 |
| c20 | 1,3502E-08 | 1,1277E-08 | 9,3235E-09 | -3,1398E-10 | -2,2711E-08 |
| c21 | -1,2382E-11 | 6,5825E-12 | 2,1333E-11 | 4,3732E-12 | -1,8865E-12 |
| c22 | -3,9251E-10 | 1,1726E-10 | 1,2284E-10 | 1,6408E-10 | 4,5026E-11 |
| c23 | 8,2758E-11 | -8,4122E-10 | -6,6957E-10 | -4,8126E-10 | -5,4378E-10 |
| c24 | 5,3413E-10 | 1,2333E-09 | 1,2541E-09 | 1,0383E-09 | 1,4572E-09 |
| c25 | -8,6704E-10 | -6,8924E-10 | -6,0588E-10 | -4,3285E-10 | -1,0942E-09 |
| c26 | 7,2039E-10 | 4,7585E-10 | 4,6730E-10 | 4,1262E-10 | 9,5465E-10 |
| c27 | -4,7812E-11 | -7,0525E-11 | -2,4959E-10 | -4,7372E-10 | -1,4810E-09 |

# Fig. 3A

| 6 | 7 | 8 | 9 | 10 | 11 |
|---|---|---|---|---|---|
| 111,339007 | 109,879307 | 109,69958 | 111,065527 | 109,14426 | 110,80565 |
| 117,560692 | 118,73278 | 119,209225 | 121,356271 | 115,706492 | 114,851773 |
| 0 | 0 | 0 | 0 | 0 | 0 |
| 0 | 0 | 0 | 0 | 0 | 0 |
| 0 | 0 | 0 | 0 | 0 | 0 |
| 3,5056E-04 | 6,4664E-04 | 9,2797E-04 | 1,4447E-03 | 1,5965E-03 | 0 |
| 0 | 0 | 0 | 0 | 0 | 0 |
| -1,8420E-06 | -3,3019E-06 | -4,9743E-06 | -3,4045E-06 | -4,3563E-06 | 4,9528E-07 |
| -4,9159E-05 | -5,3234E-05 | -6,1564E-05 | -6,5998E-05 | -5,6237E-05 | -4,1408E-05 |
| -1,4183E-05 | -1,5460E-05 | -2,1895E-05 | -1,5030E-05 | -1,3636E-05 | 1,9636E-06 |
| -2,3242E-05 | -2,4158E-05 | -2,7148E-05 | -1,9700E-05 | -6,2711E-06 | -1,5581E-05 |
| -1,2723E-07 | -7,7873E-08 | -4,5416E-08 | -5,1108E-08 | -1,0961E-07 | -1,3101E-07 |
| 5,6135E-07 | 4,9770E-07 | 6,2265E-07 | 4,3863E-07 | 8,6645E-08 | -6,9821E-09 |
| 1,5912E-06 | 1,2286E-06 | 1,0118E-06 | 6,6095E-07 | 1,5312E-07 | 9,5532E-07 |
| 4,8719E-07 | 7,2024E-07 | 8,9317E-07 | 9,2488E-07 | 5,8977E-07 | -5,4921E-08 |
| 5,3164E-07 | 5,2461E-07 | 5,2809E-07 | 7,3776E-07 | 5,2099E-07 | 3,3153E-07 |
| -1,2368E-09 | -1,4422E-09 | 3,4327E-10 | 1,0590E-10 | -6,6862E-10 | -4,6153E-10 |
| -9,5619E-10 | 9,2357E-09 | 1,8152E-08 | 2,0186E-08 | 1,0480E-08 | 8,2281E-09 |
| -2,6123E-09 | 6,0749E-09 | 2,1900E-08 | 1,8919E-08 | 6,3740E-09 | 1,3722E-09 |
| 8,8441E-09 | 6,9297E-09 | 2,5309E-08 | 2,3587E-08 | 4,5481E-09 | 7,5832E-09 |
| 7,5911E-09 | 5,8414E-10 | 6,4532E-09 | 3,7255E-09 | -8,0677E-09 | -1,1430E-09 |
| 1,0106E-08 | 1,0244E-08 | 1,1721E-08 | -1,8456E-09 | -2,1513E-08 | 1,9257E-09 |
| 2,9295E-11 | -9,8452E-12 | -1,7462E-11 | 2,4428E-12 | 7,1163E-11 | -1,7875E-11 |
| 2,0630E-12 | 1,3712E-10 | -1,6978E-10 | -1,3481E-10 | 1,9461E-10 | 3,0762E-11 |
| 2,1662E-10 | -4,8980E-10 | -7,4535E-10 | -5,9564E-10 | -1,3108E-11 | -3,3385E-10 |
| -4,7464E-10 | -6,0191E-10 | -1,2015E-09 | -1,2163E-09 | -6,4917E-10 | -6,0629E-11 |
| -1,1921E-09 | -5,3598E-10 | -6,3011E-10 | -7,1973E-10 | -4,8268E-10 | -2,2212E-10 |
| -4,6217E-10 | -4,0289E-10 | -5,1765E-10 | -5,3576E-10 | -2,2462E-10 | 4,2011E-11 |
| -1,4039E-10 | -1,0597E-10 | -1,7599E-10 | -7,0778E-10 | -7,7921E-10 | -9,4237E-11 |

## Fig. 3B

Fig. 4

Fig. 5

Fig. 6

# Fig. 7

| Fig. 7A | Fig. 7B |
|---------|---------|

| Segment | 1 | 2 | 3 | 4 | 5 |
|---------|---|---|---|---|---|
| rx | 94,168314 | 89,82372 | 89,686367 | 93,503119 | 104,405019 |
| ry | 119,258509 | 116,30943 | 118,986547 | 119,295538 | 144,389737 |
| c01 | | 0 | 0 | 0 | 0 |
| c02 | | 0 | 0 | 0 | 0 |
| c03 | | 0 | 0 | 0 | 0 |
| c04 | -0,00135668 | -0,00277598 | -0,00382151 | -0,0050245 | -0,00502946 |
| c05 | | 0 | 0 | 0 | 0 |
| c06 | 1,9610E-05 | 2,6277E-05 | 1,9653E-05 | 1,3772E-05 | 5,8273E-06 |
| c07 | -1,6285E-04 | -2,0952E-04 | -2,0693E-04 | -2,2900E-04 | -1,6182E-04 |
| c08 | 7,0573E-06 | 5,1579E-05 | 4,6664E-05 | 4,3579E-05 | 1,4606E-05 |
| c09 | -6,9050E-05 | -6,6608E-05 | -6,5986E-05 | -5,1052E-05 | -2,1304E-05 |
| c10 | -5,1084E-08 | -2,4993E-07 | -2,8799E-07 | -2,4326E-07 | -1,0798E-07 |
| c11 | -1,9072E-06 | -2,5342E-06 | -2,0666E-06 | -2,2578E-06 | -1,1788E-07 |
| c12 | 3,2940E-06 | 3,7902E-06 | 2,3408E-06 | 1,5843E-06 | 1,7632E-06 |
| c13 | -1,1871E-06 | -1,4549E-06 | -2,8333E-06 | -3,3425E-06 | -2,6829E-06 |
| c14 | 1,9446E-06 | 1,4279E-06 | 1,6676E-06 | 2,0176E-06 | 3,0712E-06 |
| c15 | 6,0592E-09 | -3,9713E-09 | -1,4280E-09 | -1,0282E-09 | 1,4585E-10 |
| c16 | -1,0169E-08 | 5,8912E-08 | 4,6393E-08 | 4,4089E-08 | 3,9747E-08 |
| c17 | -3,1502E-08 | -6,7243E-08 | -7,6795E-08 | -6,6226E-08 | -4,2412E-08 |
| c18 | 2,4254E-08 | 5,4384E-08 | 2,7102E-08 | 1,6429E-08 | 2,1904E-08 |
| c19 | 1,2942E-08 | -3,8822E-08 | -4,5360E-08 | -1,6858E-08 | 1,6110E-08 |
| c20 | 3,2886E-08 | 3,3262E-08 | 1,1872E-08 | -1,6360E-08 | -1,1377E-07 |
| c21 | 1,7882E-11 | 1,6797E-11 | 5,0895E-11 | 4,5096E-11 | 5,1077E-11 |
| c22 | -3,4984E-10 | 7,4701E-10 | 1,4271E-10 | 2,7533E-10 | -2,3843E-10 |
| c23 | 7,7896E-10 | -2,0163E-09 | -2,6684E-09 | -1,9521E-09 | -1,6726E-09 |
| c24 | 2,5164E-09 | 3,8238E-09 | 3,4021E-09 | 2,9478E-09 | 2,8976E-09 |
| c25 | -2,5944E-09 | -3,6577E-09 | -2,4162E-09 | -2,0174E-09 | -5,2009E-09 |
| c26 | 1,1094E-09 | 7,2179E-10 | 4,1143E-10 | 7,4833E-10 | 3,0812E-09 |
| c27 | -1,1685E-10 | 3,6132E-11 | -8,2768E-10 | -1,6205E-09 | -5,4918E-09 |

## Fig. 7A

| 6 | 7 | 8 | 9 | 10 | 11 |
|---|---|---|---|---|---|
| 91,970228 | 91,183404 | 91,275368 | 97,46418 | 89,954658 | 95,666269 |
| 118,5376 | 114,898961 | 119,162794 | 121,230703 | 105,91152 | 108,661645 |
| 0 | 0 | 0 | 0 | 0 | 0 |
| 0 | 0 | 0 | 0 | 0 | 0 |
| 0 | 0 | 0 | 0 | 0 | 0 |
| 0,00150141 | 0,00258645 | 0,00351644 | 0,00473758 | 0,00464849 | 0 |
| 0 | 0 | 0 | 0 | 0 | 0 |
| -2,6605E-05 | -2,1408E-05 | -2,0202E-05 | -1,0294E-05 | -1,3305E-05 | -2,2330E-08 |
| -1,7633E-04 | -1,8513E-04 | -2,0605E-04 | -1,9697E-04 | -1,6293E-04 | -1,4455E-04 |
| -1,9510E-05 | -5,0638E-05 | -6,1287E-05 | -4,6587E-05 | -6,0762E-05 | -3,9372E-06 |
| -5,8273E-05 | -6,2354E-05 | -7,5564E-05 | -4,8930E-05 | -3,4845E-05 | -4,5196E-05 |
| -5,8248E-08 | -2,2973E-07 | -2,0396E-07 | -1,9771E-07 | -3,9053E-07 | -2,9822E-07 |
| 2,3723E-06 | 2,0224E-06 | 2,1540E-06 | 9,3227E-07 | -2,1754E-07 | -2,5069E-08 |
| 3,7533E-06 | 3,9494E-06 | 3,1813E-06 | 2,1376E-06 | -5,7726E-08 | 3,7114E-06 |
| 5,5629E-07 | 1,5237E-06 | 2,7265E-06 | 2,9208E-06 | 6,1817E-07 | 1,6447E-07 |
| 1,9774E-06 | 1,7116E-06 | 1,8125E-06 | 2,5779E-06 | 7,5004E-07 | 1,1294E-06 |
| 3,5435E-09 | -6,4601E-10 | 2,4271E-09 | -2,6228E-10 | -2,9695E-09 | 1,4737E-09 |
| -4,5059E-09 | 3,8076E-08 | 6,3772E-08 | 5,5458E-08 | 3,8191E-08 | 1,0835E-08 |
| 3,2004E-08 | 2,8246E-08 | 5,6269E-08 | 5,4901E-08 | 4,1233E-08 | -7,9841E-09 |
| 3,6202E-08 | 1,4700E-08 | 6,1067E-08 | 4,9419E-08 | 2,7287E-08 | 3,2840E-08 |
| 1,4201E-08 | 1,0581E-08 | 2,9656E-08 | 9,0011E-09 | -1,0994E-08 | 2,0840E-09 |
| 2,0730E-08 | 2,3458E-08 | 2,9169E-08 | -2,2723E-08 | -4,1209E-08 | 8,3441E-10 |
| 3,7115E-11 | 2,0117E-12 | 8,1832E-12 | 4,4599E-11 | 2,5348E-10 | -1,4957E-10 |
| -9,3706E-10 | 8,1639E-11 | -6,9496E-10 | 9,3132E-11 | 8,2275E-10 | -2,3436E-10 |
| 1,8825E-09 | -1,5816E-09 | -2,2510E-09 | -2,0305E-09 | 5,5851E-10 | -3,8969E-10 |
| -2,5429E-09 | -2,3194E-09 | -3,9551E-09 | -3,9660E-09 | -1,9930E-10 | 5,4759E-10 |
| -4,1820E-09 | -2,1155E-09 | -2,3278E-09 | -2,7986E-09 | 1,6974E-10 | -1,2597E-09 |
| -6,5729E-10 | -4,5930E-10 | -1,0169E-09 | -1,5098E-09 | 6,9049E-10 | -1,5038E-10 |
| -4,0990E-10 | -2,1170E-10 | -4,8153E-10 | -2,5622E-09 | -9,1091E-10 | -2,2533E-10 |

Fig. 7B

Fig. 8

Fig. 9

Fig. 10

Fig. 11

# EUROPEAN SEARCH REPORT

Application Number

EP 21 18 8715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 434 864 B2 (GUPTA AMITAVA [US]; BLUM RONALD D [US]; PIXELOPTICS INC [US]) 7 May 2013 (2013-05-07) | 1-5,7-9, 11-19 | INV. G02C7/06 G02C7/02 |
| A | * figure 5 * <br> * column 1, line 17 - line 20 * <br> * column 1, line 65 - column 2, line 10 * <br> * column 3, line 51 - line 59 * <br> * column 5, line 60 - column 6, line 23 * <br> * column 7, line 11 - line 30 * <br> ----- | 6,10 | |
| X | FR 2 968 095 A1 (ESSILOR INT [FR]) 1 June 2012 (2012-06-01) | 1-4,7-9, 11-19 | |
| A | * figures 2c, 4a, 4b * <br> * page 2, line 31 - page 4, line 17 * <br> * page 13, line 22 - line 24 * <br> * page 18, line 5 - line 21 * <br> * page 13, line 9 - page 16, line 30 * <br> ----- | 5,6,10 | |
| X | US 2010/060851 A1 (ALLIONE PASCAL [FR]) 11 March 2010 (2010-03-11) | 1-4,7-9, 11-19 | |
| A | * figures 1, 12 * <br> * paragraphs [0014], [0015], [0023], [0075] - [0077], [0092] * <br> ----- | 5,6,10 | **TECHNICAL FIELDS SEARCHED (IPC)** <br><br> G02C |
| A | CN 210 427 985 U (RUIAN CHANGQING OPTICAL GLASSES CO LTD ET AL.) 28 April 2020 (2020-04-28) * the whole document * <br> ----- | 1-19 | |
| A | US 5 148 205 A (GUILINO GUENTHER [DE] ET AL) 15 September 1992 (1992-09-15) * the whole document * <br> ----- | 1-19 | |
| A | DE 10 2014 017678 A1 (SCHNEIDER REINER [DE]) 2 June 2016 (2016-06-02) * the whole document * <br> ----- | 1-19 | |
| | -/-- | | |

The present search report has been drawn up for all claims

| Place of search | Date of completion of the search | Examiner |
|---|---|---|
| Munich | 22 December 2021 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 18 8715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/134037 A2 (ZEISS CARL VISION INT GMBH [DE]) 26 July 2018 (2018-07-26) * the whole document * ----- | 1-19 | |
| A | US 2015/153589 A1 (MESCHENMOSER RALF [DE] ET AL) 4 June 2015 (2015-06-04) * paragraph [0175] * ----- | 7,8,18 | |

TECHNICAL FIELDS SEARCHED (IPC)

The present search report has been drawn up for all claims

| Place of search | Date of completion of the search | Examiner |
|---|---|---|
| Munich | 22 December 2021 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

**EP 21 18 8715**

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2021

| Patent document cited in search report | | | Publication date | Patent family member(s) | | | Publication date |
|---|---|---|---|---|---|---|---|
| US 8434864 | B2 | | 07-05-2013 | NONE | | | |
| FR 2968095 | A1 | | 01-06-2012 | FR | 2968095 | A1 | 01-06-2012 |
| | | | | WO | 2012072916 | A1 | 07-06-2012 |
| US 2010060851 | A1 | | 11-03-2010 | EP | 2095176 | A1 | 02-09-2009 |
| | | | | ES | 2511794 | T3 | 23-10-2014 |
| | | | | FR | 2908191 | A1 | 09-05-2008 |
| | | | | US | 2010060851 | A1 | 11-03-2010 |
| | | | | WO | 2008065266 | A1 | 05-06-2008 |
| CN 210427985 | U | | 28-04-2020 | NONE | | | |
| US 5148205 | A | | 15-09-1992 | AU | 633006 | B2 | 21-01-1993 |
| | | | | DE | 3901775 | A1 | 26-07-1990 |
| | | | | EP | 0347917 | A1 | 27-12-1989 |
| | | | | ES | 2048239 | T3 | 16-03-1994 |
| | | | | JP | 3170785 | B2 | 28-05-2001 |
| | | | | JP | H03500094 | A | 10-01-1991 |
| | | | | US | 5148205 | A | 15-09-1992 |
| | | | | WO | 8912841 | A1 | 28-12-1989 |
| DE 102014017678 | A1 | | 02-06-2016 | NONE | | | |
| WO 2018134037 | A2 | | 26-07-2018 | CA | 3054482 | A1 | 26-07-2018 |
| | | | | CA | 3074615 | A1 | 26-07-2018 |
| | | | | CA | 3088829 | A1 | 25-07-2019 |
| | | | | CA | 3107224 | A1 | 23-01-2020 |
| | | | | CN | 110431474 | A | 08-11-2019 |
| | | | | CN | 110673357 | A | 10-01-2020 |
| | | | | CN | 111886535 | A | 03-11-2020 |
| | | | | CN | 112526766 | A | 19-03-2021 |
| | | | | CN | 113196144 | A | 30-07-2021 |
| | | | | EP | 3352001 | A1 | 25-07-2018 |
| | | | | EP | 3555695 | A2 | 23-10-2019 |
| | | | | EP | 3591458 | A1 | 08-01-2020 |
| | | | | EP | 3598214 | A1 | 22-01-2020 |
| | | | | EP | 3824342 | A2 | 26-05-2021 |
| | | | | JP | 2021530744 | A | 11-11-2021 |
| | | | | KR | 20190102298 | A | 03-09-2019 |
| | | | | KR | 20190114050 | A | 08-10-2019 |
| | | | | KR | 20210032508 | A | 24-03-2021 |
| | | | | US | 2019391411 | A1 | 26-12-2019 |
| | | | | US | 2020201071 | A1 | 25-06-2020 |
| | | | | US | 2020348538 | A1 | 05-11-2020 |
| | | | | US | 2021199991 | A1 | 01-07-2021 |

EPO FORM P0459

For more details about this annex : see Official Journal of the European Patent Office, No. 12/82

**page 1 of 2**

## ANNEX TO THE EUROPEAN SEARCH REPORT
## ON EUROPEAN PATENT APPLICATION NO.

EP 21 18 8715

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2021

| Patent document cited in search report | Publication date | Patent family member(s) | | Publication date |
|---|---|---|---|---|
| | | WO 2018134037 A2 | | 26-07-2018 |
| | | WO 2020016431 A2 | | 23-01-2020 |
| US 2015153589 A1 | 04-06-2015 | BR 102014029894 A2 | | 15-09-2015 |
| | | CN 104730727 A | | 24-06-2015 |
| | | EP 2878989 A1 | | 03-06-2015 |
| | | ES 2837798 T3 | | 01-07-2021 |
| | | US 2015153589 A1 | | 04-06-2015 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3462230 A1
- US 7344245 B2
- US 8128226 B2
- US 8434025 B2
- WO 2021009268 A1
- US 9618774 B2
- US 8297751 B2
- EP 2115527 B1
- EP 2383603 B1

**Non-patent literature cited in the description**

- **WERNER KÖPPEN.** Design and Development of Progressive Lenses. *Deutsche Optiker Zeitung DOZ,* vol. 10/95, 42-46